# EUROPEAN PATENT APPLICATION

(11) **EP 4 529 054 A1**
(43) Date of publication of application: **26.03.2025**
(21) Application number: 24200520.5
(22) Date of filing: 16.09.2024
(51) Int. Cl.: H04J 14/02

(54) **PARTIALLY COLORED FLEXGRID WAVELENGTH-DIVISION MULTIPLEXER/DEMULTIPLEXER**

(30) Priority: 21.09.2023 US 202318371145
(71) Applicant: Google LLC, Mountain View, CA 94043 (US)
(72) Inventor: SCHMOGROW, Rene Marcel, Mountain View, 94043 (US)
(74) Representative: Betten & Resch

(57) **Abstract**

Wavelength division multiplexing technology in which a layer of arrayed waveguides is used to extend the number of ports of wavelength selective switches used in multiplexing and/or demultiplexing the optical signals transported over the optical network. In some examples, the wavelength division multiplexing technology is used as part of an optical signal communication system, such as between data centers or as part of a larger network.

## Description

### BACKGROUND

Wavelength-division multiplexing (WDM) technology allows data transmissions using multiple wavelengths of lights over a fiber optic medium with each wavelength forming a different channel. More specifically, optical signals at different wavelengths (colors) are multiplexed onto a single optical fiber. This allows for more data to be transmitted over a single optical fiber, which typically results in an increase in the capacity of optical data transmission networks. WDM systems are generally considered to come in two types: Coarse WDM (CWDM) and Dense WDM (DWDM). CWDM systems are typically considered those that use fewer than eight active wavelengths per fiber. DWDM systems are typically considered those that use more than eight active wavelengths per fiber. DWDM systems support optical data rates of several hundred gigabits per second (Gb/s) and even terabits per second (Tb/s). These higher optical data rates can be provided via a flexible grid pattern ("flexgrid") in which different optical signals have different bandwidths or spectral widths. In effect, flexgrid allows for each wavelength of the optical signals to be defined to have an individual spectral width.

Multiplexing and demultiplexing of multiple optical signals can be achieved with different optical technologies including, but not limited to, wavelength selective switches (WSS), arrayed waveguide gratings (AWGs), and passive colorless splitter combiners. For WSS-based and AWG-based architectures, a single WSS or AWG device is typically used to provide multiplexing/demultiplexing capability to fill the transmission spectrum of an optical communication link. WSS allows for flexible routing of optical signals on a WDM network. For example, a WSS can route multiple wavelengths on a common port to any one of a number of multi-wavelength ports. A WSS typically has a limited number of ports. A layer of passive colorless optical splitters/combiners can be used to increase the number of effective ports on a WSS.

AWGs are used to combine channels of different wavelengths onto a single optical fiber at the transmitter. AWGs are also used to separate the individual channels at the receiver.

### SUMMARY

The disclosed technology is directed to a WDM node that allows for efficient multiplexing or demultiplexing of multiple optical signals having different bandwidths, *e.g*., provide flexgrid functionality, while mitigating against or avoiding scaling insertion loss with the number of ports. For example, the disclosed technology may take the form of AWG-based WDM modules or sub-modules that each function to multiplex and/or demultiplex one or more wavelengths or channels. In effect, a layer of AWGs is used to extend the number of ports used in multiplexing and/or demultiplexing the optical signals transported over the optical network. The insertion loss of AWGs does not scale with the number of ports. The layer of AWGs therefore allows for flexgrid functionality while mitigating against having the loss scale with the number of ports. In contrast, for example, the insertion loss of colorless optical splitters/combiners typically scales with the number of ports, which can create a power budget challenge for some optical transceivers. Aspects of the disclosed technology mitigate against such losses.

Aspects of the disclosed technology may be directed to a wavelength division multiplexing technology in which a layer of arrayed waveguides is used to extend the number of ports of wavelength selective switches used in multiplexing and/or demultiplexing the optical signals transported over the optical network. In some examples, the wavelength division multiplexing technology is used as part of an optical signal communication system, such as between data centers or as part of a larger network.

Aspects of the disclosed technology may include an apparatus, system, optical module(s) or a process for wavelength division multiplexing and/or demultiplexing of optical signals. For example, the disclosed technology includes a wavelength division multiplex apparatus, comprising: a plurality of optical modules, each optical module having a first arrayed waveguide grating, the first arrayed waveguide grating including a first output port and a plurality of first input ports, each of the plurality of first input ports configured to receive optical data signals from one of a plurality of transponders for transmission on a transport fiber, the first output port outputting a combined signal formed from the optical data signals received from the plurality of transponders, wherein the plurality of optical modules are configured so that spectrally adjacent optical signals are mapped to corresponding first input ports on a different ones of the plurality of optical modules, and wherein each optical module has an optical amplifier having an output and an input, the input of the optical amplifier being coupled to receive the combined signal from the first output port of the first arrayed waveguide grating.

In accordance with this aspect of the disclosed technology, the apparatus may comprise a wavelength selective switch having a plurality of multi-wavelength ports and a common port, the common port having a common optical signal formed from optical signals inputted to the plurality of multi-wavelength ports, wherein each multi-wavelength port is associated with the output of the optical amplifier of one of the optical modules and the common port is coupled to the transport fiber. The apparatus may further comprise a contentionless wavelength selective switch coupled between the plurality of multi-wavelength ports of the wavelength selective switch and the output of the optical amplifier each optical module. Further, the plurality of optical modules comprise N optical modules and the plurality of multi-wavelength ports comprise N multi-wavelength ports, where N is an integer value equal greater than or equal to 2. Further still, the plurality of first input ports comprise M first input ports, where M is an integer value greater than 2 and equal to N.

Further in accordance with this aspect of the disclosed technology, each of the plurality of optical modules have at least two first arrayed waveguides coupled to two or more of the plurality of first input ports. Additionally, the optical data signals received on each of the plurality of first input ports from each of the plurality of transponders is at a different wavelength. Further still, the spectrally adjacent optical signals comprise optical signals within a predetermined contiguous spectral bandwidth and having a central wavelength that is adjacent to another central wavelength within the predetermined contiguous spectral bandwidth.

Further in accordance with this aspect of the disclosed technology, each of the plurality of optical modules includes a second arrayed waveguide grating including a plurality of output ports configured to provide transported data signals received on the transport fiber to the plurality of transponders. Further, the second arrayed waveguide grating includes a second input port that receives the transported data signals and separates the transported data signals into individual received signals for each of the plurality of output ports. Further still, the second input port is coupled to a plurality of multi-wavelength ports of a wavelength selective switch. In addition, the plurality of output ports is equal to the plurality of first input ports of the first arrayed waveguide grating.

Further in accordance with this aspect of the disclosed technology, the apparatus comprises a colorless splitter/combiner having a plurality of colorless input ports and a common port, the common port having a common optical signal formed from optical signals inputted to the plurality of multi-wavelength ports, wherein one of each colorless input port is associated with the output of the optical amplifier of one of the optical modules and the common port is coupled to the transport fiber.

An another aspect of the disclosed technology is an optical module for a wavelength division multiplexer or demultiplexer, comprising: a first arrayed waveguide grating, the first arrayed waveguide grating including a first output port and a plurality of first input ports, each of the plurality of first input ports configured to receive optical data signals from one of a plurality of optical transponders for transmission on a transport fiber, the first output port outputting a combined signal formed from the optical data signals received from the plurality of transponders, a first arrayed waveguide grating, the first arrayed waveguide grating including a first output port and a plurality of first input ports, each of the plurality of first input ports configured to receive optical data signals from one of a plurality of optical transponders for transmission on a transport fiber, the first output port outputting a combined signal formed from the optical data signals received from the plurality of transponders, an optical amplifier having an output and an input, the input of the optical amplifier being coupled to receive the combined signal from the first output port of the first arrayed waveguide grating.

In accordance with this aspect of the disclosed technology, the optical module may further comprise a second arrayed waveguide grating including a plurality of output ports configured to provide transported data signals received on the transport fiber to the plurality of optical transponders. Further, the second arrayed waveguide grating includes a second input port that receives the transported data signals and separates the transported data signals into individual received signals for each of the plurality of output ports. In addition, the second input port is coupled to a plurality of multi-wavelength ports of a wavelength selective switch. Further still, the plurality of output ports is equal to the plurality of first input ports of the first arrayed waveguide grating.

Another aspect of the disclosed technology is a system, comprising: a plurality of transponders; a transport fiber; and a plurality of optical modules, each optical module having a first arrayed waveguide grating, the first arrayed waveguide grating including a first output port and a plurality of first input ports, each of the plurality of first input ports configured to receive optical data signals from one of the plurality of transponders for transmission on the transport fiber, the first output port outputting a combined signal formed from the optical data signals received from the plurality of transponders, a plurality of optical modules, each optical module having a first arrayed waveguide grating, the first arrayed waveguide grating including a first output port and a plurality of first input ports, each of the plurality of first input ports configured to receive optical data signals from one of the plurality of transponders for transmission on the transport fiber, the first output port outputting a combined signal formed from the optical data signals received from the plurality of transponders, and wherein each optical module has an optical amplifier having an output and an input, the input of the optical amplifier being coupled to receive the combined signal from the first output port of the first arrayed waveguide grating.

Another aspect of the disclosed technology includes an apparatus, optical module or system that performs a process that maps spectrally adjacent optical signals receive from transponders to corresponding first input ports on a different ones of a plurality of wavelength division sub-multiplex optical modules.

### BRIEF DESCRIPTION OF THE DRAWINGS

Figure 1 illustrates an example apparatus or system in accordance with an aspect of the disclosed technology.
Figure 2 illustrates an example of optical signals occupying a portion of an optical spectrum in accordance with the disclosed technology.
Figure 3 illustrates an example apparatus or system in accordance with an aspect of the disclosed technology.
Figure 4 illustrates an example apparatus or system in accordance with an aspect of the disclosed technology.
Figure 5 illustrates an example of optical signals occupying a portion of an optical spectrum in accordance with the disclosed technology.

### DETAILED DESCRIPTION

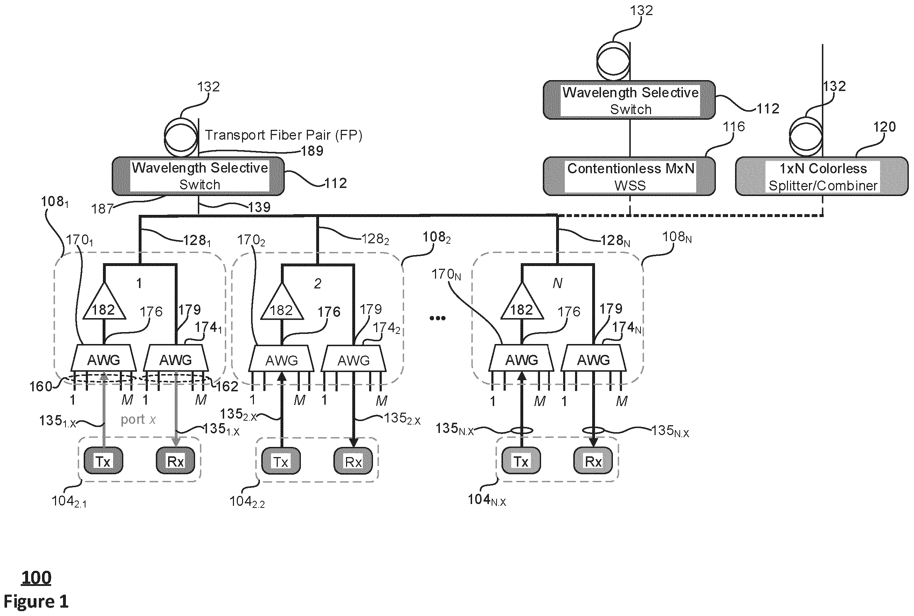

Figure 1 shows an example of an apparatus or system 100 in accordance with an aspect of the disclosed technology. The apparatus 100 includes optical modules 108, and different configurations involving a wavelength selective switch (WSS) 112, a contentionless WSS 116, and/or a colorless splitter/combiner 120. The apparatus 100 is coupled to transponders 104. Apparatus 100 functions as a wavelength division multiplexer/demultiplexer to multiplex or demultiplex optical signals it receives from or sends to transponders 104. In some examples, transponders 104 may be included as part of apparatus 100.

In the multiplex or add direction, each optical module 108 functions to receive optical data signals from a transponder 104 and combine the signal it receives into an optical signal 128. The optical signals 128 from each optical module 108 are then provided to WSS 112, contentionless WSS 116, or colorless splitter/combiner 120 for transmission over transport fiber pair 132 to far end or remotely located systems, apparatus, or equipment. For example, the systems, apparatus, or equipment can be located in a datacenter that also houses a source apparatus 100 or another data center at a different location coupled to the fiber pair 132 to function as a destination or source of data transmitted over a network that includes fiber pair 132. The network can vary in size, for example including cross-campus communication between neighboring data centers, up to and including communication over a submerged transport fiber between continents. As is further discussed below, optical module 108, and thus apparatus or system 100, may be adapted to support different applications by configuring the components that make up the optical modules and how the optical modules are coupled to the fiber pair.

A fiber pair includes two fibers, one for each direction of transmission. The optical modules 108 are coupled to the transponders 104 and WSS 112, contentionless WSS 116, or colorless splitter/combiner 120 via optical fiber pairs 135 and 139.

In the demultiplex direction, each optical module 108 functions to separate the optical signal 128 it receives from WSS 112, contentionless WSS 116, or colorless splitter/combiner 120 and provide optical data signals to the transponders 104.

As shown, transponders 104 include both a transmitter element (Tx) and a receiver element (Rx). As such, transponders function to transmit and receive optical data signals, respectively, ultimately for transport on fiber pair 135. In the example of Figure 1, each optical module 108 is shown as communicating with one transponder to simplify the diagram. However, in other examples, and more typical of practical applications, each optical module 108 would communicate with multiple transponders 104 via ports 160, 162 of the optical module 108. Each of the multiple transponders that communicate with a given optical module 108 would do so using signals at different wavelengths, as discussed in further detail below, and possibly having different bandwidths. Transponders 104 would also communicate with one or more other systems, e.g., host systems, which act as data sources and sinks for the information carried by the optical data signals. Connections to those systems are not shown for simplicity, but will typically include electrical connections of the information carrying signals, e.g., baseband signals. The wavelengths of the transponders are typically tunable over a range around a center wavelength.

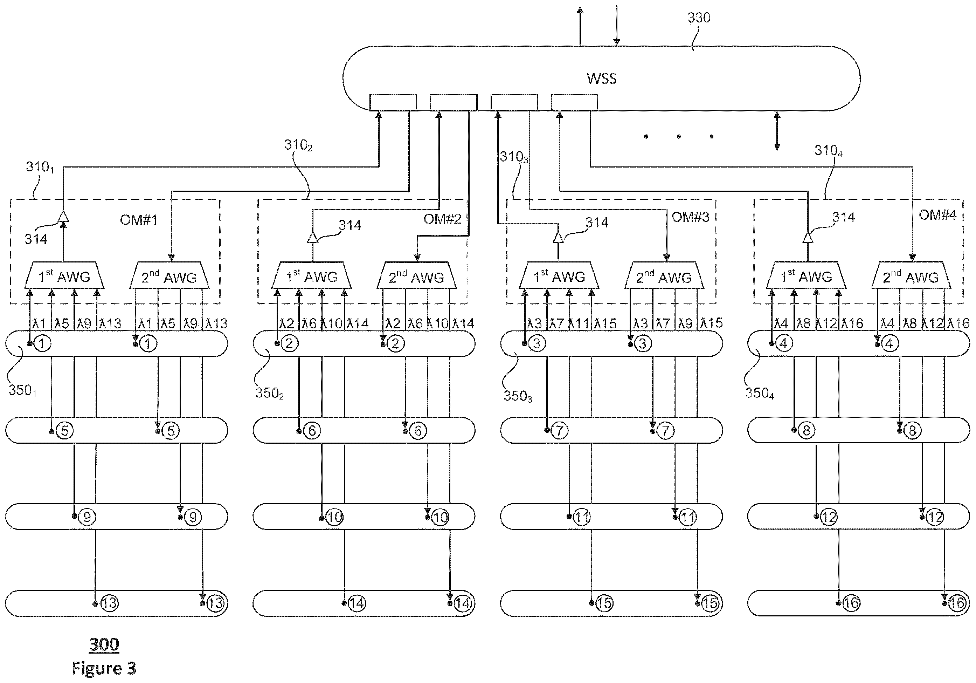

Each of optical modules 108 includes a first arrayed waveguide grating (AWG) 170 and a second AWG 174. Each AWG 170 includes multiple input ports 160₁ - 160_{M} and an output port 176. AWG 174 includes an input port 179 and multiple output ports 162₁ - 162_{M}. AWG 170 and AWG 174 function as colored, respectively, combiners and splitters and may be considered functionally as sub-multiplexer or sub-demultiplexer modules. Specifically, input ports 160 are configured as input channels, each of which accepts light only of a certain wavelength range or within a wavelength window. Similarly, output ports 162 are configured as output channels, each of which output light only at a certain wavelength range or window. As shown in Figure 3 for example, for each optical module 108, for an input port 160 of AWG 170 that operates at a given wavelength, the AWG 174 has a corresponding output port that operates at the same given wavelength. For instance, input port 1 and output port 1 in an optical module 108 receive and transmit signals at the same wavelength as each other, input port 2 and output port 2 at the same wavelength as each other (but which is different than the wavelength for the other input/output ports), etc. In this regard, an input/output port pair comprises an input port and output port on an AWG that, respectively, receives and transmits optical signals at the same wavelength.

Further, spectrally adjacent optical signals, *e.g*., spectrally adjacent optical channels or wavelengths, go into different AWGs but at the same corresponding port. For example, each of the transponders 104 are connected to the same port X on each optical module 108. As such, optical signals received at ports X of different AWGs in the apparatus 100 will occupy a given spectral window or contiguous portion of the optical spectrum based on the spectrally adjacent optical signals.

The optical signal at output port 176 of each AWG 170 is a wavelength division multiplexed signal that includes optical signals at each wavelength received at input port 160₁ - 160_{M}. Output port 176 is coupled via fiber to an optical amplifier 182. Optical amplifier 182 can be an optical fiber amplifier or a semiconductor amplifier. The optical fiber amplifier may be an erbium doped fiber amplifier or a fiber Raman amplifier. In accordance with the disclosed technology, because the insertion loss of an AWG is typically lower than that of a colorless optical splitter/combiner, *e.g*., from 14 dB (colorless optical splitter/combiner) to less than 4 dB for a 1x16 split ratio, optical amplifier 182 can be a lower gain, and cheaper, optical amplifier. Further, an optical amplifier is optional and there may be implementations that do not require an amplifier, *e.g*., depending on the reach of the system. Other implementations may include two amplifiers, one in the add direction and another in the drop direction. Further, other implementations may include an amplifier only in the drop direction.

Optical amplifier 182 amplifies the optical signals it receives from the AWGs 170 and provides the amplified optical signals to, for example, WSS 112. WSS 112 consists of N multi-wavelength ports 187 and a single common port 189. For simplicity in Figure 1, the N multi-wavelength ports 187 are shown as a single connection point. WSS 112 operates such that each wavelength from the common port 189 can be switched or routed to any one of the N multi-wavelength ports, and vice versa. In essence, WSS 112 switches the wavelengths or channels traversing the system or apparatus 100 and also functions as a programmable optical multiplexer/demultiplexer. The optical signal from the common port 189 is transmitted via fiber pair 132 to a remote or far end wavelength division demultiplexer, which may be configured as described herein or use other configurations.

For example, if the wavelength division multiplexer is configured in accordance with the disclosed technology in the demultiplex direction, a WSS 112 routes the optical signal it receives over a fiber pair 132 to the appropriate ones of the multi-wavelength ports 187. Specifically, the WSS 112 routes the optical signals to the appropriate optical module 108. AWG 174 in the optical module 108 demultiplexes or separates the optical signal it receives on its input port 179 into the individual wavelengths or channels and outputs those signals on the appropriate one of output ports 162.

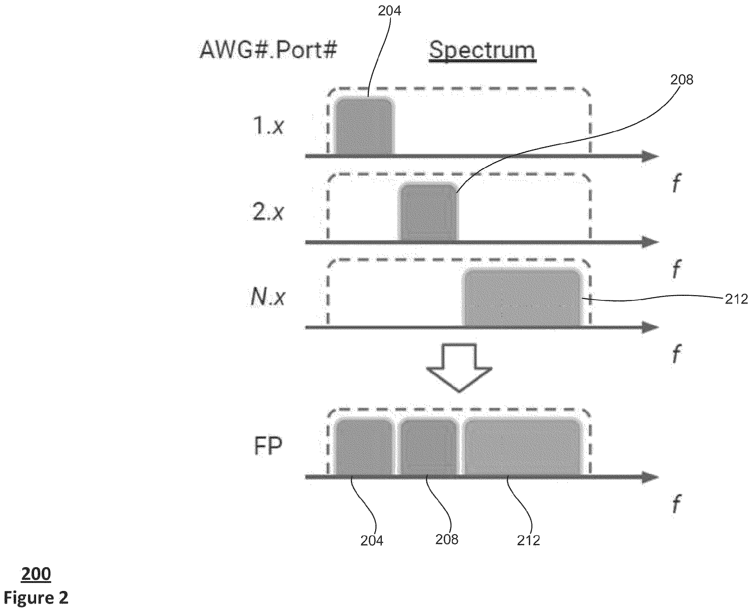

As a specific example, each of the transponders 104 are shown as transmitting and receiving optical signals via ports X of AWGs 170, 174. Each of transponders 104_{1.X}, 104_{2.X} and 104_{N.X} use spectrally adjacent optical signals or channels as shown using spectrum 200 in Figure 2. The spectrally adjacent optical signals are shown as signal 204 for AWGs 170₁ and 174₁; signal 208 for AWGs 170₂ and 174₂; and signal 212 for AWGs 170_{N} and 174_{N}. As shown, the signals are processed as flexgrid optical signals, with signal 212 occupying a different spectral bandwidth than signals either of 204 and 208. Further, the signals are adjacent to each other spectrally so they occupy a contiguous portion of the optical spectrum.

For the example of Figure 2, AWGs 170, 174 have a 4800 GHz bandwidth and 16 input/output ports or channels; the spectral bandwidth is therefore divided into 300 GHz bins, *i.e.,* 4800 GHz/16 = 300 GHz free spectral range per bin. Free spectral range (FSR) describes the distance between each AWG center frequency. In this example, we have a total spectrum of 4800 GHz and 16 ports such that the FSR is 300 GHz. As such, the per channel bandwidth is 300 GHz. In other words, each input/output port pair has a 300 GHz channel. The spectrum-to-port mapping includes a two-step process where the larger spectrum window is selected first (*e.g.,* 300 GHz) and then the signal on an AWG port is assigned a sub-portion of the spectrum window.

The disclosed technology is well suited for use of a lower gain, cheaper optical amplifier only in the multiplexing or add direction, as in the demultiplexing or drop direction the coherent gain provided by the local oscillator at the receiver advantageously is used to avoid using an amplifier. However, as previously discussed, other implementations are possible where an amplifier is not used in either direction or in both directions. In addition, the apparatus or system architecture can limit noise funneling (in contrast, out of band noise from multiple optical signals adds up in architectures that use a colorless mux/demux in place of AWGs). Further, a filter, such as a tunable optical filter (TOF), may be avoided on the multiplex side of the disclosed apparatus or system.

As shown in Figure 1, the apparatus 100 may also be configured to include a contentionless WSS 116 coupled between the WSS 112 and optical modules 108. The contentionless WSS 116 includes an MxN switching fabric, where M corresponds to the number of degrees, or WSS modules to connect to, in a colorless, directionless and contentionless (CDC) node. N corresponds to the number of add/drop ports either coupled directly to transponders or to pre-multiplexer modules 108. The dimensions of the MxN WSS are not necessarily coupled to the dimension of the pre-mux/demux modules 108.

Contentionless WSS 116 provides contentionless routing of the channels or wavelengths being used. In general, contentionless routing allows WSS 116 to establish a first connection between a first input port and a first output port at one wavelength, without preventing a second connection from being established at that same wavelength between a second input port and a second output port. Contentionless WSS 116 therefore provides this flexibility and allows any channel or wavelength to be routed to any port on WSS 112. The output ports of WSS 116 are connected to different and/or multiple WSS modules 112.

As also shown in Figure 1, a 1xN colorless splitter/combiner 120 may be coupled to the optical modules 108 and fiber pair 132 in place of WSS 112 or in place of WSS 112 and contentionless WSS 116. 1xN colorless splitter/combiner 120 combines the N optical signals it receives from the N optical modules in a single optical signal for transmission on fiber pair 132. In the demultiplex or drop direction, 1xN colorless splitter/combiner 120 separates the optical signals it receives on fiber pair 132 into N optical signals for the N optical modules. In contrast to the configurations that employ only WSS 112 or both WSS 112 and contentionless WSS 116, the colorless splitter/combiner configuration does not provide the routing flexibility of the other configurations and is better suited for point-to-point type architectures.

Figure 3 shows an apparatus or system 300 in accordance with an aspect of the disclosed technology. Apparatus or system 300 is simplified in terms of the number of input/output ports relative to Figure 1, but includes additional detail regarding connections between optical modules 310 and WSS 330 and the channel or wavelength mappings. More specifically, apparatus or system 300 includes four optical modules 310 coupled between WSS 330 and a plurality of transponders 350. In the multiplex or add direction, each optical module 310 includes a first AWG 312 and amplifier 314. In the demultiplex or drop direction, each optical module 310 includes a second AWG 316. Each AWG 312, 316 has 4 input or output ports.

The input and output ports of each AWG are connected to respective transponders 350 as shown in relation to optical module 310₁. In this example, the apparatus is configured to process 16 channels, each channel corresponding to a different wavelength. Specifically, the WDM grid includes the following channels at the following wavelengths:

| | | | | | | | | | | | | | | | |
|---|---|---|---|---|---|---|---|---|---|---|---|---|---|---|---|
| CH1 (λ1) | CH2 (λ2) | CH3 (λ3) | CH4 (λ4) | CH5 (λ5) | CH6 (λ6) | CH7 (λ7) | CH8 (λ8) | CH9 (λ9) | CH10 (λ10) | CH11 (λ11) | CH12 (λ12) | CH13 (λ13) | CH14 (λ14) | CH15 (λ15) | CH16 (λ16) |

Spectrally adjacent channels are shown as next to each other. In accordance with the disclosed technology, spectrally adjacent signals get mapped to the same port on different AWGs which, as shown in Figure 3, results in the following:

For AWGs 312₁ and 314₁ of optical module 310₁:

| Port 1 | Port 2 | Port 3 | Port 4 |
|---|---|---|---|
| CH1 (λ1) | CH5 (λ5) | CH9 (λ9) | CH13 (λ13) |

For AWGs 312₂ and 314₂ of optical module 310₂:

| Port 1 | Port 2 | Port 3 | Port 4 |
|---|---|---|---|
| CH2 (λ2) | CH6 (λ6) | CH10 (λ10) | CH14 (λ14) |

For AWGs 312₃ and 314₃ of optical module 310₃:

| Port 1 | Port 2 | Port 3 | Port 4 |
|---|---|---|---|
| CH3 (λ3) | CH7 (λ7) | CH11 (λ11) | CH15 (λ15) |

For AWGs 312₄ and 314₄ of Optical Module 310₄:

| Port 1 | Port 2 | Port 3 | Port 4 |
|---|---|---|---|
| CH4 (λ4) | CH8 (λ8) | CH12 (λ12) | CH16 (λ16) |

With reference to optical module 310₁, the optical signals provided by respective transponders on CH1 (λ1), CH5 (λ5), CH9 (λ9), and CH13 (λ13) are combined by AWG 312₁ into an optical signal that is provided to amplifier 314₁. Amplifier 314₁ amplifies the optical signal it receives and sends the optical signal to WSS 330. As shown, WSS 330 has 4 ports, each of which communicates with an optical module 310. WSS 330 processes the optical signal it receives from optical module 310₁ and routes that signal onto fiber 340 for transmission to another system. The channels mapped to the other optical modules would be processed in a similar way in the multiplex or add direction.

In the demultiplex or drop direction, WSS 330 receives an optical signal on fiber 342 and routes each channel to the appropriate optical module 310. For instance, with respect to optical module 310₁, this would include CH1 (λ1), CH5 (λ5), CH9 (λ9), and CH13 (λ13).

In accordance with the disclosed technology, each channel mapped to the same corresponding port would occupy a contiguous portion of the optical spectrum as discussed above. Specifically, in this example, CH1, CH2, CH3, and CH4 would occupy a spectral window occupying a contiguous portion of the optical spectrum. Similarly, so would, respectively, CH5, CH6, CH7, and CH8; CH9, CH10, CH11, and CH12; and CH13, CH14, CH15, and CH16.

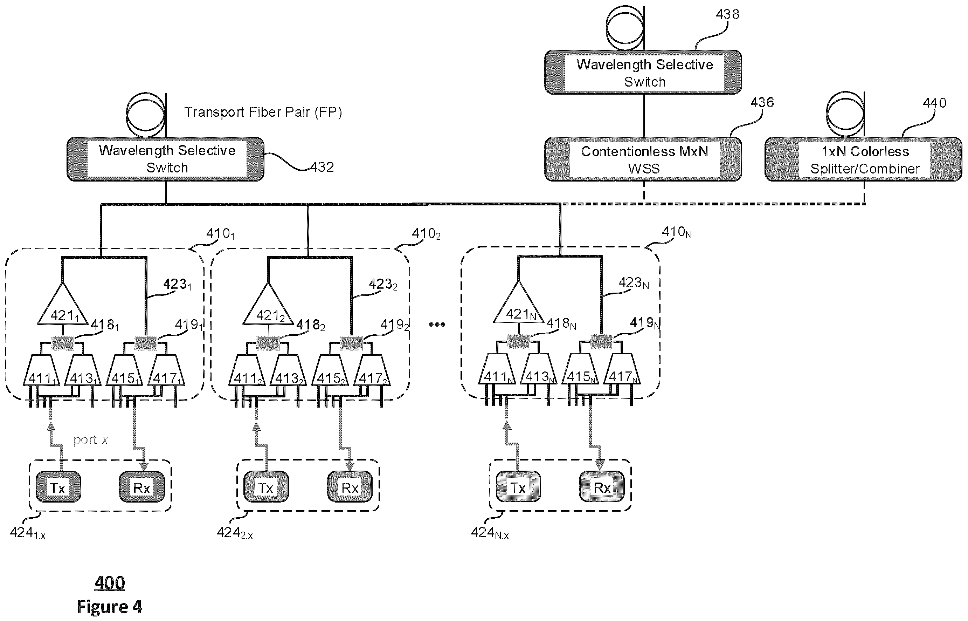

Figure 4 illustrates an example apparatus or system 400 in accordance with an aspect of the disclosed technology. As shown, the apparatus or system 400 includes N optical modules 410 that are coupled to transponders 424 and WSS 432, contentionless WSS 436, and WSS 438 or colorless splitter/combiner 440. In comparison to Figures 1 or 3, optical modules 410 are configured differently than optical modules 108. Otherwise, WSSs 432 and 438, contentionless WSS 436, and colorless splitter/combiner 440 are configured and function similarly to their counterparts in Figures 1 or 3.

As shown in Figure 4, each optical module 410 includes a first pair of AWGs 411, 413 in the multiplex/add direction and a second pair of AWGs 415, 417 in the demultiplex/drop direction. Each optical module 410 also includes a pair of colorless splitters/combiners 418, 419. Colorless splitter/combiner 418 couples the two optical signals it receives from AWGS 411, 413 into an optical signal that is provided to amplifier 421. Colorless splitter/combiner 419 splits the signal it receives on fiber 423₁ into optical signals that are fed to AWGs 415, 417.

As is also shown in Figure 4, the number of input/output ports of the optical units is split between two AWGs. Specifically, the M input ports are split between two AWGs 411, 413 and the M output ports are split between AWGs 415, 417. Each of these AWGs will have fewer ports when compared with the AWGs in Figure 1. Each AWG 411, 413 includes M/2 ports while each AWG 170, 174 in Figure 1 has M ports.

Other implementations are also possible. For example, the number of AWGs can include more than two per add/multiplex or drop/demultiplex path. For instance, each path can include 4 AWGs. To accommodate such a configuration, the splitters/combiners would need to include 1x4 splitter combiners.

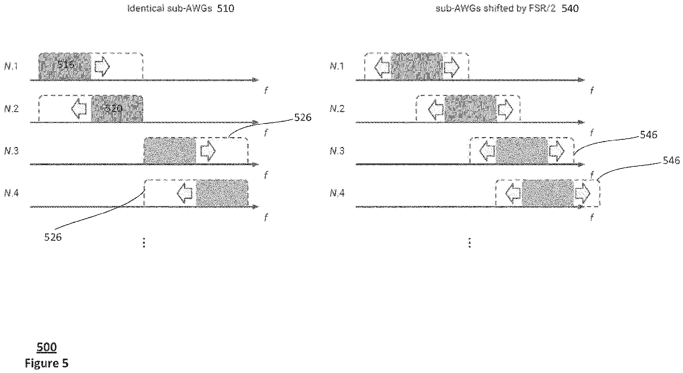

With reference to Figures 4 and 5, the apparatus or system 400 can be implemented to achieve different spectral mappings 500. In a first example 510, AWGs 411 and 413 are configured identically, while in a second example 520, AWGs 411 and 413 are shifted by FSR/2.

In operation, the spectral profile 512 of the first example 510 is arrived at in the add direction as follows. Initially, note that by using two identical AWGs 411, 413, each AWG need only include half the number of ports, as compared to the configuration in Figure 1. In this regard, the spectral passband of AWGs 411, 413 can be configured to be twice as large. In the example illustrated via Figure 5, each port of AWGs 411, 413 is configured to have the same passband as the example discussed in relation to Figures 1 and 2. For instance, for the first optical module 410₁, port 1 of the first AWG 411 is assigned the lower half 516 of the passband or spectrum 518. Port 1 of the second AWG 413 gets assigned the upper half 520 of the spectrum 518. In instances where a transponder to port 1 of AWG 411 has a bandwidth that exceeds the lower half 516 of the spectrum so that it occupies the upper half 520, the signal connected to port 1 of AWG 413 would need to be configured to avoid overlapping with the signal at port 1 of AWG 411.

As shown via spectral profile 546, the signals input to the second optical module 410₂ can be processed in a similar manner in the add direction. Likewise, signals input to other modules can be processed similarly. Further, signals input to each port of each module would be processed similarly but would be conveyed in different spectral windows as discussed above in relation to Figure 1 and shown in Figure 2. In the drop direction, the spectrum appears the same as in the add direction and the signals would be processed similarly at their respective spectral frequencies as discussed with respect to Figures 1 and 2.

The configuration shown in Figure 4 in essence doubles the spectral width of each AWG port while maintaining the multiplex or demultiplex ratio of Figure 1. This results in more flexibility for flexgrid implementations (e.g., bigger continuous spectral windows).

In the other example 520, AWGs 411 and 413 are not configured to be identical. In this example, AWGs 411 and 413 are configured to have the same FSR but their respective grids are shifted. As shown, this configuration allows the transponder signals to grow beyond the upper and lower boundaries of their allocated spectral passbands.

The examples discussed above include configurations with two AWGs per optical module (Figure 1) and four AWGs per optical module (Figure 2). Other configurations are possible. For instance, the number of AWGs per optical module may include more than two AWGs based on factors such as cost, flexibility, and insertion loss. In this regard, more AWGs may provide more spectral flexibility in line with discussions relating to Figure 5 but at increased cost dependent on the number of AWGs. The number of AWGs may be scaled differently if the source and destination are within a given datacenter or remotely connected via a wide area network. Further, the system gain afforded by the disclosed technology makes the technology attractive for applications that seek to make use of coherent pluggables in long haul networks. As such, the disclosed technology may find use across a broad spectrum of transponders.

The disclosed technology may take the form of an apparatus, system or process that includes the following features and sub-features:
F1. A wavelength division multiplex apparatus, comprising:
   a plurality of optical modules, each optical module having a first arrayed waveguide grating, the first arrayed waveguide grating including a first output port and a plurality of first input ports, each of the plurality of first input ports configured to receive optical data signals from one of a plurality of transponders for transmission on a transport fiber, the first output port outputting a combined signal formed from the optical data signals received from the plurality of transponders,
   wherein the plurality of optical modules are configured so that spectrally adjacent optical signals are mapped to corresponding first input ports on a different ones of the plurality of optical modules, and
   wherein each optical module has an optical amplifier having an output and an input, the input of the optical amplifier being coupled to receive the combined signal from the first output port of the first arrayed waveguide grating.
F2. The apparatus of claim F1, comprising a wavelength selective switch having a plurality of multi-wavelength ports and a common port, the common port having a common optical signal formed from optical signals inputted to the plurality of multi-wavelength ports, wherein each multi-wavelength port is associated with the output of the optical amplifier of one of the optical modules and the common port is coupled to the transport fiber.
F3. The apparatus of F2, comprising a contentionless wavelength selective switch coupled between the plurality of multi-wavelength ports of the wavelength selective switch and the output of the optical amplifier each optical module.
F4. The apparatus of any one of F2 to F3, wherein the plurality of optical modules comprise N optical modules and the plurality of multi-wavelength ports comprise N multi-wavelength ports, where N is an integer value equal greater than or equal to 2.
F5. The apparatus of any one of F2 to F4, wherein the plurality of first input ports comprise M first input ports, where M is an integer value greater than 2 and equal to N.
F6. The apparatus of any one of F1 to F5, wherein each of the plurality of optical modules have at least two first arrayed waveguides coupled to two or more of the plurality of first input ports.
F7. The apparatus of any one of F1 to F6, wherein the optical data signals received on each of the plurality of first input ports from each of the plurality of transponders is at a different wavelength.
F8. The apparatus of any one of F1 to F7, wherein the spectrally adjacent optical signals comprise optical signals within a predetermined contiguous spectral bandwidth and having a central wavelength that is adjacent to another central wavelength within the predetermined contiguous spectral bandwidth.
F9. The apparatus of any one of F1 to F8, wherein each of the plurality of optical modules includes a second arrayed waveguide grating including a plurality of output ports configured to provide transported data signals received on the transport fiber to the plurality of transponders.
F10. The apparatus of F9, wherein the second arrayed waveguide grating includes a second input port that receives the transported data signals and separates the transported data signals into individual received signals for each of the plurality of output ports.
F11. The apparatus of F10, wherein the second input port is coupled to a plurality of multi-wavelength ports of a wavelength selective switch.
F12. The apparatus of F11, wherein the plurality of output ports is equal to the plurality of first input ports of the first arrayed waveguide grating.
F13. The apparatus of F2, comprising a colorless splitter/combiner having a plurality of colorless input ports and a common port, the common port having a common optical signal formed from optical signals inputted to the plurality of multi-wavelength ports, wherein one of each colorless input port is associated with the output of the optical amplifier of one of the optical modules and the common port is coupled to the transport fiber.
F14. The apparatus of F1, wherein the plurality of first input ports comprise M first input ports, where M is an integer value greater than 2 and not equal to N.
F15. An optical module for a wavelength division multiplexer or demultiplexer, comprising:
   a first arrayed waveguide grating, the first arrayed waveguide grating including a first output port and a plurality of first input ports, each of the plurality of first input ports configured to receive optical data signals from one of a plurality of optical transponders for transmission on a transport fiber, the first output port outputting a combined signal formed from the optical data signals received from the plurality of transponders,
      a first arrayed waveguide grating, the first arrayed waveguide grating including a first output port and a plurality of first input ports, each of the plurality of first input ports configured to receive optical data signals from one of a plurality of optical transponders for transmission on a transport fiber, the first output port outputting a combined signal formed from the optical data signals received from the plurality of transponders, and
   an optical amplifier having an output and an input, the input of the optical amplifier being coupled to receive the combined signal from the first output port of the first arrayed waveguide grating.
F16. The optical module of F 15, comprising a second arrayed waveguide grating including a plurality of output ports configured to provide transported data signals received on the transport fiber to the plurality of optical transponders.
F17. The optical module of any one of F15 to F16, wherein the second arrayed waveguide grating includes a second input port that receives the transported data signals and separates the transported data signals into individual received signals for each of the plurality of output ports.
F18. The optical module of any one of F15 to F17, wherein the second input port is coupled to a plurality of multi-wavelength ports of a wavelength selective switch.
F19. The optical module of anyone F16 to F18, wherein the plurality of output ports is equal to the plurality of first input ports of the first arrayed waveguide grating.
F20. A system, comprising:
   a plurality of transponders;
   a transport fiber; and
   a plurality of optical modules, each optical module having a first arrayed waveguide grating, the first arrayed waveguide grating including a first output port and a plurality of first input ports, each of the plurality of first input ports configured to receive optical data signals from one of the plurality of transponders for transmission on the transport fiber, the first output port outputting a combined signal formed from the optical data signals received from the plurality of transponders,
   wherein the plurality of optical modules are configured so that spectrally adjacent optical signals are mapped to corresponding first input ports on a different ones of the plurality of optical modules, and
   wherein each optical module has an optical amplifier having an output and an input, the input of the optical amplifier being coupled to receive the combined signal from the first output port of the first arrayed waveguide grating.
F21. A process that maps spectrally adjacent optical signals received from transponders to (or transmitted to transponders from) corresponding first input ports on a different ones of a plurality of wavelength division multiplex/de-multiplex optical modules implemented in accordance with the features of the optical module in any one of F1 to F20..

Although the technology herein has been described with reference to particular examples, it is to be understood that these examples are merely illustrative of the principles and applications of the disclosed technology. It is, therefore, to be understood that numerous modifications may be made to the illustrative examples and that other arrangements may be devised without departing from the scope of the present technology as defined by the appended claims. For instance, the disclosed technology may be used by a reconfigurable optical add-drop multiplexer (ROADM) or, more generally, in WDM networks to provide colorless, directionless and/or contentionless routing of optical signals between sources and destinations.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only some but not all possible variations of the disclosed technology. Further, the same reference numbers in different drawings can identify the same or similar elements.

## Claims

1. A wavelength division multiplex apparatus, comprising:
a plurality of optical modules, each optical module having a first arrayed waveguide grating, the first arrayed waveguide grating including a first output port and a plurality of first input ports, each of the plurality of first input ports configured to receive optical data signals from one of a plurality of transponders for transmission on a transport fiber, the first output port outputting a combined signal formed from the optical data signals received from the plurality of transponders,
wherein the plurality of optical modules are configured so that spectrally adjacent optical signals are mapped to corresponding first input ports on a different ones of the plurality of optical modules, and
wherein each optical module has an optical amplifier having an output and an input, the input of the optical amplifier being coupled to receive the combined signal from the first output port of the first arrayed waveguide grating.

2. The apparatus of claim 1, comprising a wavelength selective switch having a plurality of multi-wavelength ports and a common port, the common port having a common optical signal formed from optical signals inputted to the plurality of multi-wavelength ports, wherein each multi-wavelength port is associated with the output of the optical amplifier of one of the optical modules and the common port is coupled to the transport fiber.

3. The apparatus of claim 2, comprising a contentionless wavelength selective switch coupled between the plurality of multi-wavelength ports of the wavelength selective switch and the output of the optical amplifier each optical module.

4. The apparatus of any one of claims 2 or 3, wherein the plurality of optical modules comprise N optical modules and the plurality of multi-wavelength ports comprise N multi-wavelength ports, where N is an integer value equal greater than or equal to 2, optionally wherein the plurality of first input ports comprise M first input ports, where M is an integer value greater than 2 and equal to N.

5. The apparatus of any one of the preceding claims, wherein the plurality of first input ports comprise M first input ports, where M is an integer value greater than 2 and not equal to N and/or wherein each of the plurality of optical modules have at least two first arrayed waveguides coupled to two or more of the plurality of first input ports.

6. The apparatus of any one of the preceding claims, wherein the optical data signals received on each of the plurality of first input ports from each of the plurality of transponders is at a different wavelength; and/or wherein the spectrally adjacent optical signals comprise optical signals within a predetermined contiguous spectral bandwidth and having a central wavelength that is adjacent to another central wavelength within the predetermined contiguous spectral bandwidth.

7. The apparatus of any one of the preceding claims, wherein each of the plurality of optical modules includes a second arrayed waveguide grating including a plurality of output ports configured to provide transported data signals received on the transport fiber to the plurality of transponders.

8. The apparatus of claim 7, wherein the second arrayed waveguide grating includes a second input port that receives the transported data signals and separates the transported data signals into individual received signals for each of the plurality of output ports, optionally wherein the second input port is coupled to a plurality of multi-wavelength ports of a wavelength selective switch.

9. The apparatus of any one of claims 7 or 8, wherein the plurality of output ports is equal to the plurality of first input ports of the first arrayed waveguide grating.

10. The apparatus of any one of claims 2 to 9, comprising a colorless splitter/combiner having a plurality of colorless input ports and a common port, the common port having a common optical signal formed from optical signals inputted to the plurality of multi-wavelength ports, wherein one of each colorless input port is associated with the output of the optical amplifier of one of the optical modules and the common port is coupled to the transport fiber.

11. An optical module for a wavelength division multiplexer or demultiplexer, comprising:
a first arrayed waveguide grating, the first arrayed waveguide grating including a first output port and a plurality of first input ports, each of the plurality of first input ports configured to receive optical data signals from one of a plurality of optical transponders for transmission on a transport fiber, the first output port outputting a combined signal formed from the optical data signals received from the plurality of transponders,
a first arrayed waveguide grating, the first arrayed waveguide grating including a first output port and a plurality of first input ports, each of the plurality of first input ports configured to receive optical data signals from one of a plurality of optical transponders for transmission on a transport fiber, the first output port outputting a combined signal formed from the optical data signals received from the plurality of transponders, and
an optical amplifier having an output and an input, the input of the optical amplifier being coupled to receive the combined signal from the first output port of the first arrayed waveguide grating.

12. The optical module of claim 11, comprising a second arrayed waveguide grating including a plurality of output ports configured to provide transported data signals received on the transport fiber to the plurality of optical transponders.

13. The optical module of claim 12, wherein the second arrayed waveguide grating includes a second input port that receives the transported data signals and separates the transported data signals into individual received signals for each of the plurality of output ports, optionally wherein the second input port is coupled to a plurality of multi-wavelength ports of a wavelength selective switch.

14. The optical module of any one of claims 12 or 13, wherein the plurality of output ports is equal to the plurality of first input ports of the first arrayed waveguide grating.

15. A system, comprising:
a plurality of transponders;
a transport fiber; and
a plurality of optical modules, each optical module having a first arrayed waveguide grating, the first arrayed waveguide grating including a first output port and a plurality of first input ports, each of the plurality of first input ports configured to receive optical data signals from one of the plurality of transponders for transmission on the transport fiber, the first output port outputting a combined signal formed from the optical data signals received from the plurality of transponders,
wherein the plurality of optical modules are configured so that spectrally adjacent optical signals are mapped to corresponding first input ports on a different ones of the plurality of optical modules, and
wherein each optical module has an optical amplifier having an output and an input, the input of the optical amplifier being coupled to receive the combined signal from the first output port of the first arrayed waveguide grating.
